# EUROPEAN PATENT SPECIFICATION

(11) **EP 3 248 779 B1**
(45) Date of publication and mention of the grant of the patent: **18.09.2019**
(21) Application number: 16739738.9
(22) Date of filing: 12.01.2016
(51) Int. Cl.: C25D 11/04, C25D 13/06, C25D 11/24, C25D 13/20, B05D 1/02, B05D 3/02, B05D 5/08, C25D 11/02, C25D 11/08, C25D 13/12

(54) **ALUMINUM ALLOY SECTION AND MANUFACTURING METHOD THEREFOR**
ALUMINIUMLEGIERUNGSABSCHNITT UND HERSTELLUNGSVERFAHREN DAFÜR
SECTION D'ALLIAGE D'ALUMINIUM ET SON PROCÉDÉ DE FABRICATION

(30) Priority: 20.01.2015 CN 201510029035
(43) Date of publication of application: 29.11.2017
(73) Proprietor: Guangdong JMA Aluminium Profile Factory (Group) Co., Ltd., Foshan, Guangdong 528231 (CN)
(72) Inventor: XIONG, Jianqing, Foshan Guangdong 528231 (CN); LUO, Shiwei, Foshan Guangdong 528231 (CN); CHEN, Zhigang, Foshan Guangdong 528231 (CN); DAI, Yuexing, Foshan Guangdong 528231 (CN); ZHU, Shenglin, Foshan Guangdong 528231 (CN)
(74) Representative: dompatent von Kreisler Selting Werner - Partnerschaft von Patent- und Rechtsanwälten mbB
(86) International application number: PCT/CN2016/070693
(87) International publication number: WO 2016/115991

(56) References cited:
- CN-A- 101 293 460
- CN-A- 104 589 760
- CN-A- 105 039 808
- CN-U- 202 098 031
- CN-U- 204 749 434
- JP-A- S63 290 296
- JP-A- 2004 155 836

## Description

### Technical Field of the present invention

The present invention relates to the technical field of building materials, and in particular to an aluminum alloy section and manufacturing method therefor.

### Background of the present invention

Aluminum alloy section is a kind of common building material. In order to improve the corrosion resistance of the section and to have a certain color decoration function, surface treatment should be performed on the section before being used. According to the surface treatment manner, the aluminum alloy section products are divided into oxidization-colored products, organic paint sprayed products and other products. The oxidization-colored products show a certain color by forming a layer of dense oxide film on the surface of the aluminum alloy section and forming a certain amount of non-ferrous metal ions in the oxide film by electrolytic reduction, by using the anodizing and electrolytic coloring principle. For the organic paint sprayed products, a layer of organic paint is sprayed on the surface of the section which has been subjected to the degreasing and chemical conversion treatment, and the main organic paint includes powdery or liquid paints, such as polyester paints, acrylic paints and fluorocarbon paints. The chemical conversion can allow the surface of the section to have certain corrosion resistance and organic paint adhesion performance, and chromating, phosphochromating and zirconium-titanium conversion are commonly used.

However, the coloring principle of the oxidization-colored products is to place an electrolytically oxidized aluminum alloy section in an acidic metal salt solution for forming non-ferrous metal ions into the oxide film by electrolytic reduction, and to generate a color by absorption and scattering of light by a different amount of deposited nonferrous metals. At present, the mainly used metal salts are copper, tin, nickel, manganese, silver and selenium salts, etc, wherein the copper salt is red, the manganese, silver and selenium salts are yellow, and the color range of other metal salts mostly varies from bronze to black, therefore, the color is monotonous. Meanwhile, the metal with certain color in the oxidization-colored products are easily oxidized to result in change in color under strong ultraviolet rays or in the air with high humidity and high salt ion content. Consequently, the weather resistance is not ideal.

In addition, for the organic paint sprayed products, before painting, chemical conversion treatment should be performed on the surface of the aluminum section to form a layer of conversion film, in order to improve the corrosion resistance and organic paint adhesion performance of the aluminum section. Although the current chromating or phosphochromating processes can meet the requirements of better performance, those processes all belong to processes to be banned by the state or local government due to the hypertoxicity of the medicaments. Moreover, a zirconium-titanium conversion film is transparent so that the film quality cannot be intuitively determined and controlled, and the corrosion resistance is not ideal. That is, the dot corrosion resistance or filiform corrosion resistance of the organic paint sprayed products is not ideal.

Therefore, an aluminum alloy section product with excellent corrosion resistance and weather resistance is required.

The patent application publications JP63290296 and JP2004155836 disclose a method of treating an aluminium substrate comprising the steps of anodizing, coating with an anionic electrophoretic resin and spraying fluorocarbon paint.

### Summary of the present invention

In view of the above problems, an objective of the present invention is to provide an aluminum alloy section and manufacturing method therefor for solving the above problems. This aluminum alloy section has extremely excellent weather resistance, and can effectively resist against the corrosion damage on the aluminum alloy section by high humidity and corrosive saline ions.

The present invention provides a method for manufacturing an aluminum alloy section, including the following steps of:
(1) pre-treating an aluminum alloy section base material;
(2) anodizing the pre-treated aluminum alloy section base material to form an oxidation film on the surface of an aluminum alloy section;
(3) carrying out anodic electrophoresis treatment on the aluminum alloy section base material to form an electrophoresis paint film on the surface of the aluminum alloy section;
(4) curing and roasting the aluminum alloy section; and
(5) spraying fluorocarbon paint to the surface of the aluminum alloy section to form a fluorocarbon coating.

Wherein optionally, in the step (4), the temperature for curing and roasting is 120 to 160 degrees centigrade.

Wherein optionally, in the step (4), the during time for curing and roasting is 20-30 min.

Wherein optionally, the temperature for curing and roasting is 130 degrees centigrade and the during time for curing and roasting is 25 min.

Wherein the step (5) includes the following steps of: (51) spraying fluorocarbon primer to form a fluorocarbon primer coating; and (52) spraying fluorocarbon finish to form a fluorocarbon finish coating; wherein the fluorocarbon primer coating contains acrylic resin, fluorocarbon resin and epoxy resin/polyester resin, in percentage by weight, 10-20% of acrylic resin, 35-50% of fluorocarbon resin and 16-30% of epoxy resin or polyester resin.

Wherein optionally, the step (5) further includes a step (53) following the step (52): spraying fluorocarbon varnish to form a fluorocarbon varnish coating.

Wherein optionally, the step (5) further includes a step (511) between the step (51) and the step (52): spraying fluorocarbon primer surfacer to form a fluorocarbon primer surfacer coating.

Wherein optionally, in the step (51), the thickness of the formed fluorocarbon primer coating is 5-10 um;
in the step (52), the thickness of the formed fluorocarbon finish coating is 25-30 um;
in the step (53), the thickness of the formed fluorocarbon varnish coating is 10-20 um; and
in the step (511), the thickness of the formed fluorocarbon primer surfacer coating is 20-25 um.

Wherein optionally, the step (1) includes the following steps of:
(11) soaking the aluminum alloy section base material in a degreasing solution for degreasing;
(12) washing the aluminum alloy section with water;
(13) soaking the aluminum alloy section in a sodium hydroxide solution for alkaline etching;
(14) washing the aluminum alloy section with water;
(15) soaking the aluminum alloy section in a sulfuric acid solution for neutralizing; and
(16) washing the aluminum alloy section with water;
the step (2) includes: putting the aluminum alloy section into the sulfuric acid solution, supplying DC power by using the aluminum alloy section as an anode and a pure aluminum plate as a cathode to generate the oxide film on the surface of the aluminum alloy section, wherein the thickness of the oxide film is 5-15 um;
the step (3) includes: putting the aluminum alloy section into the electrophoresis paint solution, supplying DC power by using the aluminum alloy section as an anode and a stainless steel plate as a cathode to form the electrophoresis paint film on the surface of the aluminum alloy section by electrolytic deposition;
a step between the step (2) and the step (3) includes: washing the aluminum alloy section with water and hot water;
a step between the step (3) and the step (4) includes: washing the aluminum alloy section with water; and
a step following the step (5) includes: curing and roasting the aluminum alloy section.

According to another aspect of the present invention, an aluminum alloy section manufactured by the manufacturing method is provided.

The method for manufacturing an aluminum alloy section provided by the present invention adopts a composite film coating production process integrating anodizing, electrophoresis and fluorocarbon paint spraying, By roasting at a low temperature after the electrophoresis process, and using, as the fluorocarbon primer, a primer paint containing acrylic resin and fluorocarbon resin as main components and functional resins such as epoxy resin or polyester resin as base components, the adhesion between the various coatings is ensured while the corrosion resistance, weather resistance and other properties thereof are improved. The production process of the manufacturing method is stable and feasible. Moreover, the aluminum alloy section product produced by the manufacturing method has a special composite film protective coating on its surface and excellent corrosion resistance and weather resistance, and can effectively resist against the corrosion damage on the aluminum alloy section by ultraviolet rays, high humidity and corrosive saline ions. Therefore, the aluminum alloy section is particularly suitable for buildings in islands and seaside regions under marine climate.

### Brief Description of the Drawings

The accompanying drawings incorporated into the description and constitutea part of the description show the embodiments of the present invention, and are used to explain the principle of the present invention together with the description. In these drawings, similar reference numerals are used to denote similar elements.The drawings described below show some but not all of the embodiments of the present invention. For a person of ordinary skill in the art, other drawings can be obtained according to these drawings without paying any creative effort.
Fig. 1 is a flowchart of a method for manufacturing an aluminum alloy section; and
Fig. 2 is a schematic diagram of an aluminum alloy section.

### Detailed Description of the present invention

To make the purposes, technical solutions and advantages of the embodiments of the present invention more clear, the technical solutions in the embodiments of the present invention will be clearly and completely described with reference to the drawings in the embodiments of the present invention. Apparently, the embodiments described are some but not all of the embodiments of the present invention. On the basis of the embodiments in the present invention, all other embodiments, obtained by a person of ordinary skill in the art without paying any creative efforts, shall fall into the protection scope of the present invention. It should be noted that, if not conflict, the embodiments in the application and characteristics in the embodiments can be arbitrarily combined with each other.

The present invention provides an aluminum alloy section and a method for manufacturing the same. The manufacturing method includes the following steps of: (1) pre-treating an aluminum alloy section base material; (2) anodizing the pre-treated aluminum alloy section base material to form an oxide film on the surface of an aluminum alloy section; (3) carrying out anodic electrophoresis treatment on the aluminum alloy section to form an electrophoresis paint film on the surface of an aluminum alloy section; (4) curing and roasting the aluminum alloy section; and (5) spraying a fluorocarbon coating to the surface of the aluminum alloy section to form a fluorocarbon coating. Wherein, the step of curing and roasting the aluminum alloy section is based on a low-temperature roasting process, that is, the temperature for roasting is 120-160 degrees centigrade. This is because roasting at a low temperature can make the electrophoresis paint film enter the semi-crosslinked state which is beneficial for bonding with the fluorocarbon coating. Moreover, the fluorocarbon primer uses a primer paint containing acrylic resin and fluorocarbon resin as main components and functional resins such as epoxy resin or polyester resin as base components, so that the fluorocarbon primer is integrally crosslinked with the electrophoresis paint film. In this way, the adhesion problem between the coatings is solved.

The aluminum alloy section and a manufacturing method therefor provided by the present invention will be further described in detail with reference to the accompanying drawings.

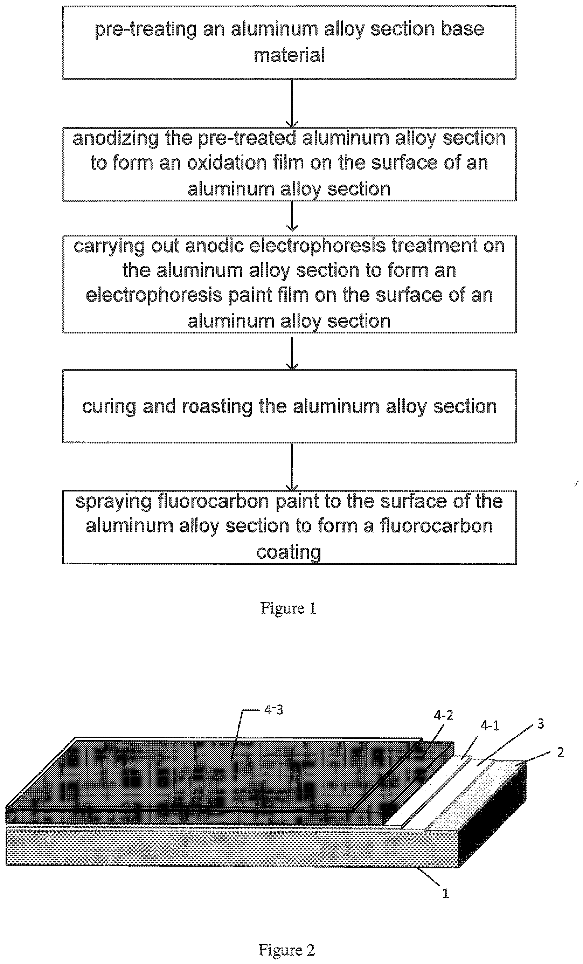

Fig. 1 is a flowchart of a method for manufacturing an aluminum alloy section provided by the present invention. As shown in Fig. 1, the manufacturing method includes the following steps of:
(1) pre-treating an aluminum alloy section base material;
(2) anodizing the pre-treated aluminum alloy section base material to form an oxidation film on the surface of an aluminum alloy section;
(3) carrying out anodic electrophoresis treatment on the aluminum alloy section to form an electrophoresis paint film on the surface of the aluminum alloy section;
(4) curing and roasting the aluminum alloy section; and
(5) spraying a fluorocarbon coating to the surface of the aluminum alloy section to form a fluorocarbon coating.

The steps will be described in detail below.

In the step (1), the aluminum alloy section base material is pre-treated, wherein the aluminum alloy section base material is a base material in accordance with the requirements of design and the national standard (GB 5237,1-2008). The pre-treatment includes the following steps:
(11) The aluminum alloy section base material is soaked in degreasing solution for degreasing pre-treatment. In this step, 4-10wt% of the degreasing solution is prepared by an acidic degreaser, and the section base material is soaked in the solution for about 5-10 min for degreasing, in order to remove oil stains or fingerprints caused by processing from the surface of the aluminum section.
(12) The aluminum alloy section is washed with water.
(13) The aluminum alloy section is soaked in a sodium hydroxide solution for alkaline etching. In this step, the aluminum alloy section is soaked in the solution with a sodium hydroxide concentration of 40-60 g/L for 3-5 min at 60-70 degrees centigrade.
(14) The aluminum alloy section is washed with water.
(15) The aluminum alloy section is soaked in a sulfuric acid solution for neutralizing. In this step, the aluminum alloy section is soaked in the solution with a sulfuric acid concentration of 160-220g/L for 2-4 min.
(16) The aluminum alloy section is washed with water.

In the step (2), the aluminum alloy section base material is anodized to form an oxide film on the surface of the aluminum alloy section, specifically including the following steps of: putting the aluminum alloy section into a solution with a sulfuric acid concentration of 150-180 g/L, supplying DC power by using the aluminum alloy section as an anode and a pure aluminum plate as a cathode to generate a layer of dense oxide film on the surface of the aluminum alloy section by electrolytic oxidation. The specific parameters during the oxidation are as follows: the oxidation voltage is 13-15 V, the current density is 1-1.3 A/dm2, the bath temperature is18-22 degrees centigrade, the aluminum ions are less than 20g/L, and the time is 25-40 min. Under the control of the above parameters, the thickness of the generated oxide film is 5-15 um.

The anodic electrophoresis treatment is performed in the step (3) to form an electrophoresis paint film on the surface of the aluminum alloy section base material. Compared with the cathodic electrophoresis, the anodic electrophoresis here is more suitable for forming an electrophoresis paint film on the surface of the aluminum alloy section base material. The step (3) specifically includes the following steps of: preparing a solution with a solid content of 6-8% by adding functional resins to the Hani acrylic electrophoresis paint, supplying DC power by using the aluminum alloy section as an anode and a stainless steel plate as a cathode to form an electrophoresis paint film on the surface of the aluminum alloy section by electrolytic deposition. The specific parameters used during the electrophoresis are as follows: the electrical conductivity is 600-800 us/cm, isopropyl alcohol is 1.5-2.5%, ethylene glycol monobutyl ether is 0.5-1.5%, the voltage is 90-150 V, the current density is 10-15 A/m2, and the temperature is 20-26 degrees centigrade. Under the control of the above parameters, the thickness of the generated electrophoresis paint film is 5-10 um.

It should be noted that there is a step between the step (2) and the step (3): washing the aluminum alloy section with water and hot water. Wherein, during washing with hot water, the water temperature is 80-85 degrees centigrade and the during time is 1-3 min.

In the step (4), the aluminum alloy section is cured and roasted. In this step, the low temperature roasting process is adopted, because roasting at a low temperature can make the electrophoresis paint film enter the semi-crosslinked state which is beneficial for bonding with the fluorocarbon coating. By a lot of experiments, it is found that when the roasting temperature is 120-160 degrees centigrade, the bonding between the electrophoresis paint film and the fluorocarbon coating is the best. In addition, by experiments, it is found that at this temperature, when the roasting time is 20-30 min, the bonding between the electrophoresis paint film and the fluorocarbon coating is the best.

It should be noted that there is a step between the step (3) and the step (4): washing the aluminum alloy section with water.

In the step (5), the fluorocarbon paint is sprayed on the surface of the aluminum section by an electrostatic liquid phase spraying method, to form fluorocarbon coatings. A two-layer process can be adopted to form the fluorocarbon coating. However, in order to obtain a coating with excellent performance, a three-layer or four-layer process is generally adopted. The three-layer process is usually adopted, the layers are respectively: a fluorocarbon primer coating, a fluorocarbon finish coating and a fluorocarbon varnish coating. The fluorocarbon paint is mainly synthesized by using polyvinylidene fluoride resin (PVDF) as the base component and adding metal powder or mineral powder, and has metallic luster. The fluorocarbon coating is resistant against ultraviolet radiation, and the corrosion resistance of the fluorocarbon coating is superior to that of a powder coating. The fluorocarbon paint is used after being filtered by a filter sieve of 120-200 meshes. Specifically, the step (5) includes the steps.
(51) The fluorocarbon primer is sprayed to form a fluorocarbon primer coating. The primer use the fluorocarbon primer containing acrylic resin and polyvinylidene fluoride resin as main components and functional resins such as epoxy resin or polyester resin as base components. Specifically, the fluorocarbon primer coating according to the invention contains, in percentage by weight, 35-50% of fluorocarbon resin (i.e., PVDF), 10-20% of acrylic resin and 16-30% of epoxy resin or polyester resin. This fluorocarbon primer can have an intermolecular cross-linking reaction with and thus be integrated with the electrophoresis paint film. In this way, the adhesion problem between the coatings is solved. In addition, the fluorocarbon primer has good corrosion resistance, so that the aluminum alloy section can effectively resist against the corrosion damage on the aluminum alloy section by ultraviolet rays, high humidity and corrosive saline ions, and is thus particularly suitable for buildings in islands and seaside regions under marine climate conditions. The thickness of the fluorocarbon primer coating is controlled in a range of 5-10 um. After the fluorocarbon primer is sprayed, the section is leveled at room temperature for 8-15 min.
(52) The fluorocarbon finish is sprayed to form a fluorocarbon finish coating. The thickness of the fluorocarbon finish coating is 25-30 um. After the fluorocarbon finish is sprayed, the section is leveled at room temperature for 8-15 min.

Moreover, in order to achieve a better effect, the step (5) further includes a step following the step (52):
(53) The fluorocarbon varnish is sprayed to form a fluorocarbon varnish coating. That is, fluorocarbon finishing varnish is sprayed to form a fluorocarbon finishing protective coating. The thickness of the fluorocarbon protective coating is controlled in a range of 10-20 um, and after the fluorocarbon varnish is sprayed, the section is leveled at room temperature for 15-30 min.

Further, the step (5) can further include a step (511) between the step (51) and the step (52): spraying fluorocarbon primer surfacer (also known as barrier paint) to form a fluorocarbon primer surfacer coating. The fluorocarbon primer surfacer coating can increase the thickness of the film to further resist against ultraviolet rays. The thickness of the fluorocarbon primer surfacer coating is 20-25 um, preferably 23 um.

It should be noted that, following the step (5), the aluminum alloy section is to be cured and roasted. That is, at a temperature greater than or equal to 232 degrees centigrade, the section is roasted for a period of time greater than or equal to 5 min.

The specific embodiments of the method for manufacturing an aluminum alloy section of the present invention will be described below. The description will be given by taking the step (5) including steps (51), (52), (53), i.e., the three-layer process, as an example.

### Embodiment 1

1. Aluminum section base material: preparing a section of 6063 alloy square tube section of 100 mm*25 mm*2 mm (wall thickness) which meets the requirements of national standard (GB 5237,1-2008);
2. degreasing pre-treatment: preparing 5 wt% of the degreasing solution from an acidic degreaser produced by Potencer Chemical Company, soaking the section in the solution for 5 min for degreasing, and taking it from the solution after the oil stains are visually removed from the surface of the section;
3. washing the section with water;
4. alkaline etching: soaking the section in the solution with a sodium hydroxide concentration of 52 g/L at a temperature of 64 degrees centigrade for 4 min;
5. washing the section with water;
6. neutralizing: soaking the section in the solution with a sulfuric acid concentration of 185 g/L for 3 min;
7. washing with water;
8. anodizing;
   8.1. putting the section into the solution with a sulfuric acid concentration of 165 g/L, and supplying DC power by using the aluminum alloy section as an anode and a pure aluminum plate as a cathode;
   8.2. process parameters: the oxidation voltage being 14.5 V, the current density being 1.05 A/dm2, the bath temperature being 18.5 degrees centigrade, the aluminum ions being 18 g/L, the time being 33 min, and the average thickness of the generated oxide film being 9 um;
9. washing the section with water;
10. washing with hot water: the water temperature being 83 degrees centigrade and the during time being 2 min;
11. anodic electrophoresis;
11.1. preparing a solution with a solid content of 7.5% by using an acrylic electrophoresis paint added with functional resins, supplying DC power by using the aluminum alloy section as an anode and a stainless steel plate as a cathode;
11.2. process parameters: the electrical conductivity being 650 us/cm, isopropyl alcohol being 2.5%, ethylene glycol monobutyl ether being 0.5%, the voltage being 120 V, the current density being 12 A/m2, the temperature being 22.5 degrees centigrade, the thickness of the generated electrophoresis paint film being 5 um after soaking for 5 min;
12. washing the section with water;
13. curing and roasting: drying at a temperature of 130 degrees centigrade for 25 min;
14. spraying: spraying the fluorocarbon paint onto the surface of the cured and roasted square tube aluminum section by an electrostatic liquid phase spraying method to form a fluorocarbon coating. The spraying equipment is a Randbury electrostatic spraying equipment system and the fluorocarbon finish is the metal paint with a color number of EC-DG-M313746JM from Akesu Company, The paint is diluted with xylene, and filtered by a filter sieve of 150 meshes for future use;
14.1. spraying fluorocarbon primer, and controlling the average thickness of the fluorocarbon primer coating being 8 um;
14.2. leveling the coating at room temperature for 10 min;
14.3. continuously spraying fluorocarbon finish to form a fluorocarbon finish coating, and controlling the average thickness of the fluorocarbon finish coating being 28 um;
14.4. Leveling the coating at room temperature for 10 min;
14.5. finally spraying the fluorocarbon finishing varnish from Akesu Company to form a fluorocarbon finishing protective coating, and controlling the average thickness of the fluorocarbon protective coating being 10 um;
14.6. leveling the coating at room temperature for 15 min;
15. curing and roasting: roasting at a temperature of 235 degrees centigrade for 10 min to obtain the aluminum alloy section product of the present invention.

### Embodiment 2

1. Aluminum section base material: preparing a section of 6063 alloy square tube section of 100 mm*25 mm*2 mm (wall thickness) which meets the requirements of national standard (GB 5237,1-2008);
2. degreasing pre-treatment: preparing 4 wt% of the degreasing solution from an acidic degreaser produced by Potencer Chemical Company, soaking the section in the solution for 10 min, and taking it from the solution after the oil stains are visually removed from the surface of the section;
3. washing the section with water;
4. alkaline etching: soaking the section in the solution with a sodium hydroxide concentration of 40 g/L at a temperature of 70 degrees centigrade for 3 min;
5. washing the section with water;
6. neutralizing: soaking the section in the solution with a sulfuric acid concentration of 220g/L for 2 min;
7. washing the section with water;
8. anodizing:
   8.1. putting the section into the solution with a sulfuric acid concentration of 180 g/L, and supplying DC power by using the aluminum alloy section- as an anode and a pure aluminum plate as a cathode;
   8.2. process parameters: the oxidation voltage being 13V, the current density being 1.3 A/dm2, the bath temperature being 18 degrees centigrade, the aluminum ions being 19 g/L, the time being 40 min and the average thickness of the generated oxide film being 15 um;
9. washing the section with water;
10. washing with hot water: the water temperature being 80 degrees centigrade and the during time being 3 min;
11. anodic electrophoresis;
11.1. preparing a solution with a solid content of 6% by using an acrylic electrophoresis paint added with functional resins, supplying DC power by using the aluminum alloy section as an anode and a stainless steel plate as a cathode;
11.2. process parameters: the electrical conductivity being 800 us/cm, isopropyl alcohol being 1.5%, ethylene glycol monobutyl ether being 1.5%, the voltage being 90V, the current density being 15A/m2, the temperature being 20 degrees centigrade, the thickness of the generated electrophoresis paint film being 10 um after soaking for 5 min;
12. washing the section with water;
13. curing and roasting: drying at a temperature of 120 degrees centigrade for 30 min;
14. spraying: spraying the fluorocarbon paint onto the surface of the cured and roasted square tube aluminum section by an electrostatic liquid phase spraying method to form a fluorocarbon coating. The spraying equipment is a Randbury electrostatic spraying equipment system and the fluorocarbon finish is the metal paint with a color number of EC-DG-M313746JM from Akesu Company, The paint is diluted with xylene, and filtered by a filter sieve of 120 meshes for future use.
14.1. spraying fluorocarbon primer, and controlling the average thickness of the fluorocarbon primer coating being 5 um;
14.2. leveling the coating at room temperature for 8 min;
14.3. continuously spraying fluorocarbon finish to form a fluorocarbon finish coating, and controlling the average thickness of the fluorocarbon finish coating being 25 um;
14.4. leveling the coating at room temperature for 8 min;
14.5. finally spraying the fluorocarbon finishing varnish from akesu company to form a fluorocarbon finishing protective coating, and controlling the average thickness of the fluorocarbon protective coating being 20 um;
14.6. leveling the coating at room temperature for 30 min;
15. curing and roasting: roasting at a temperature of 237 degrees centigrade for 8 min to obtain the aluminum alloy section product of the present invention.

### Embodiment 3

1. Aluminum section base material: preparing a section of 6063 alloy square tube section of 100 mm*25 mm*2 mm (wall thickness) which meets the requirements of national standard (GB 5237,1-2008);
2. degreasing pre-treatment: preparing 10 wt% of the degreasing solution from an acidic degreaser produced by Potencer Chemical Company, soaking the section in the solution for 8 min, and taking it from the solution after the oil stains are visually removed from the surface of the section.
3. washing the section with water;
4. alkaline etching: soaking the section in the solution with a sodium hydroxide concentration of 60 g/L at a temperature of 60 degrees centigrade for 5 min;
5. washing the section with water;
6. neutralizing: soaking the section in the solution with a sulfuric acid concentration of 160 g/L for 4 min;
7. washing the section with water;
8. anodizing:
   8.1. putting the section into the solution with a sulfuric acid concentration of 150 g/L, and supplying DC power by using the aluminum alloy section as an anode and a pure aluminum plate as a cathode;
   8.2. process parameters: the oxidation voltage being 15 V, the current density being 1 A/dm2, the bath temperature being 22 degrees centigrade, the aluminum ions being 17 g/L, the time being 25 min and the average thickness of the generated oxide film being 5 um;
9. washing the section with water;
10. washing with hot water: the water temperature being 85 degrees centigrade and the during time being 1 min;
11. anodic electrophoresis:
   11.1. preparing a solution with a solid content of 8% by using acrylic electrophoresis paint added with the functional resins, supplying DC power by using the aluminum alloy section as an anode and a stainless steel plate as a cathode;
   11.2. process parameters: the electrical conductivity being 600 us/cm, isopropyl alcohol being 2%, ethylene glycol monobutyl ether being 1%, the voltage being 150 V, the current density being 10 A/m2, the temperature being 26 degrees centigrade, and the thickness of the generated electrophoresis paint film being 8 um after soaking for 5 min.
12. washing the section with water;
13. curing and roasting: drying at a temperature of 160 degrees centigrade for 20 min;
14. spraying: spraying the fluorocarbon paint onto the surface of the cured and roasted square tube aluminum section by an electrostatic liquid phase spraying method to form a fluorocarbon coating. The spraying equipment is a Randbury electrostatic spraying equipment system and the fluorocarbon finish is the metal paint with a color number of EC-DG-M313746JM from Akesu Company, The paint is diluted with xylene, and filtered by a filter sieve of 200 meshes for future use.
14.1. spraying fluorocarbon primer, and controlling the average thickness of the fluorocarbon primer coating being 10 um;
14.2. leveling at room temperature for 15 min;
14.3. continuously spraying fluorocarbon finish to form a fluorocarbon finish layer, and controlling the average thickness of the fluorocarbon finish coating being 30 um;
14.4. leveling the coating at room temperature for 15 min;
14.5. finally spraying the fluorocarbon finishing varnish from akesu company to form a fluorocarbon finishing protective coating, and controlling the average thickness of the fluorocarbon protective coating being 15 um;
14.6. leveling the coating at room temperature for 25 min;
15. curing and roasting: roasting at a temperature of 232 degrees centigrade for 5 min to obtain the aluminum alloy section product of the present invention.

The method for manufacturing an aluminum alloy section provided by the present invention adopts a complete set of production process with an optimized design, to ensure the adhesion between the various coatings while improving the corrosion resistance, weather resistance and other properties thereof. The process of curing and roasting the electrophoresis paint film is based on a low-temperature roasting process, because roasting at a low temperature can make the electrophoresis paint film enter the semi-crosslinked state which is beneficial for bonding with the fluorocarbon coating. Moreover, the fluorocarbon primer uses a primer paint containing acrylic resin and fluorocarbon resin as main components and functional resins such as epoxy resin or polyester resin as base components, so that the fluorocarbon primer is integrally crosslinked with the electrophoresis paint film. In this way, the adhesion problem between the coatings is solved.

The present invention further provides an aluminum alloy section manufactured by the manufacturing method. Fig. 2 is a schematic diagram of the aluminum alloy section. Referring to Fig. 2, the aluminum alloy section includes an aluminum alloy base material 1, and an oxide film coating 2, an electrophoresis paint coating 3 and a fluorocarbon coating are successively provided on the surface of the aluminum alloy section base material 1 for inner to outside. The aluminum oxide section base material 1 is pretreated and anodized, to form the oxide film coating 2 on the base material 1, and the oxide film coating 2 is then coated with the electrophoresis paint film coating 3, and both of them have certain thicknesses. As a result, the aluminum oxide section base material 1 has double corrosion resistance performances on its surface, and is bonded with the fluorocarbon coating by the electrophoresis paint layer 3 and is thus hard to fall off. The fluorocarbon coating is coated on the outermost side of the aluminum alloy section base material 1 to ensure the weather resistance and corrosion resistance of the product of the present invention, while having rich colors. Taking the three-layer process as an example, as shown in Fig. 2, the fluorocarbon coating includes, from inside to outside,a fluorocarbon primer coating 4-1, a fluorocarbon finish coating 4-2 and a fluorocarbon varnish coating 4-3. The fluorocarbon coatings formed by several procedures has certain thicknesses. If the two-layer process is adopted, the fluorocarbon coating includes, from inside to outside, a fluorocarbon primer coating 4-1 and a fluorocarbon finish coating 4-2. If the three-layer process is adopted, the fluorocarbon coating includes, from inside to outside, a fluorocarbon primer coating 4-1, a fluorocarbon primer surfacer coating (not shown), a fluorocarbon finish coating 4-2 and a fluorocarbon varnish coating 4-3. The fluorocarbon primer coating 4-1 plays a role of bonding the electrophoresis paint coating 3 and the fluorocarbon finish coating 4-2 and is corrosion resistant, and the fluorocarbon finish coating 4-2 is color decorative, has the weather resistance against ultraviolet rays and the like, and the fluorocarbon varnish coating 4-3 further strengthens the color and corrosion resistance, and the fluorocarbon primer surface surfacer coating can further resist against ultraviolet rays.

Through product performance tests on the aluminum alloy section manufactured by the manufacturing method, the test results shown in Table 1 can be obtained.

**Test Results**

| Test Item | | Standard requirement | | Sample |
|---|---|---|---|---|
| | | Oxidation product | Fluorocarbon product | |
| Adhesion | Dry | Cross-cut tape test, grade 0 | Cross-cut tape test, grade 0 | grade 0 |
| | Wet | Cross-cut tape test, grade 0 | Cross-cut tape test, grade 0 | grade 0 |
| | Boiling water | Cross-cut tape test, grade 0 | Cross-cut tape test, grade 0 | grade 0 |
| Salt mist resistance | CASS test | 16 H, higher than grade 9 | 4000h neutral salt mist test, penetration corrosion width under films on two sides of the scribing line is not more than 2mm | More than 6000h, meets the standard |
| Weather resistance | Accelerated weathering test | Accelerated ageing by a 313B fluorescent UV lamp, discoloration degree at least up to grade1 | Accelerated ageing artificially by radiating by a hernia lamp for 2000h, grade 0 | More than 4000h, meets the standard |

The test results show that the aluminum alloy section has higher corrosion resistance and weather resistance and overcomes the adhesion problem between the coatings.

It can be seen from the above description that the aluminum alloy section of the present invention is formed by being mainly subjected to an integrated surface treatment process containing anodizing, anodic electrophoresis and fluorocarbon paint spraying. A special composite film protective coating successively formed by an oxide film, an electrophoresis paint film, a fluorocarbon paint film is formed on its surface. The oxide film is dense and thus highly corrosion resistant; the fluorocarbon paint provides rich decorative colors and is highly weather resistant; and the electrophoresis paint and the fluorocarbon primer can have an intermolecular cross-linking reaction after being added with functional resins and treated by special processes, while further optimizing the corrosion resistance of the oxide film, to effectively resist against the corrosion damage on the aluminum alloy section by corrosive saline ions in high humidity.

The aluminum alloy section product produced by the manufacturing method has a special composite film protective coating on its surface and excellent corrosion resistance and weather resistance, and can effectively resist against the corrosion damage on the aluminum alloy section by ultraviolet rays, high humidity and corrosive saline ions. Therefore, the aluminum alloy section is particularly suitable for buildings in islands and seaside regions under marine climate conditions.

The content described above can be implemented separately or incombinations in various ways. However, all thosevariations shall fall into the protection scope of the present invention.

The value of the specific size of components listed in the present invention is exemplary. The size parameters of different components may take different values during practical construction according to construction requirements.

It should be noted that terms as used here, such as "include", "comprise" or other variants, are intended to cover non-exclusive inclusion, so that an item or an apparatus including a series of elements includes not only these elements, and also other elements not explicitly listed, or also includes elements intrinsic to this item or apparatus. In the absence of more restrictions, an element defined by a statement "include...." does not exclude the possibility that there are additional same elements in the item or apparatus including this element.

The embodiments above are merely used to describe but not to limit the technical solutions of the present invention. The present invention has been described in detail merely with reference to preferred embodiments. It should be understood by a person of ordinary skill in the art that modifications can be made to the technical solutions of the present invention without departing from the scope of the technical solutions of the present invention, and those modifications shall fall into the scope defined by the claims of the present invention.

### Industrial applicability

The present invention adopts a composite film coating production process integrating anodizing, electrophoresis and fluorocarbon paint spraying. By roasting at a low temperature after the electrophoresis process, and using, as the fluorocarbon primer, a primer paint containing acrylic resin and fluorocarbon resin as main components and functional resins such as epoxy resin or polyester resin as base components, the adhesion between the various coatings is ensured while the corrosion resistance, weather resistance and other properties thereof are improved. The production process of the manufacturing method is stable and feasible. Moreover, the aluminum alloy section product produced by the manufacturing method has a special composite film protective coating on its surface and excellent corrosion resistance and weather resistance, and can effectively resist against the corrosion damage on the aluminum alloy section by ultraviolet rays, high humidity and corrosive saline ions.

## Claims

1. A method for manufacturing an aluminum alloy section, comprising the following steps of:
(1) pre-treating an aluminum alloy section base material;
(2) anodizing the pre-treated aluminum alloy section base material to form an oxidation film on the surface of an aluminum alloy section;
(3) carrying out anodic electrophoresis treatment on the aluminum alloy section base material to form an electrophoresis paint film on the surface of the aluminum alloy section;
(4) curing and roasting the aluminum alloy section; and
(5) spraying fluorocarbon paint to the surface of the aluminum alloy section to form a fluorocarbon coating; **characterized in that** the step (5) comprises the following steps of:
(51) spraying fluorocarbon primer to form a fluorocarbon primer coating; and
(52) spraying fluorocarbon finish to form a fluorocarbon finish coating;
wherein the fluorocarbon primer coating contains acrylic resin, fluorocarbon resin and epoxy resin/polyester resin, in percentage by weight, 10-20% of acrylic resin, 35-50% of fluorocarbon resin and 16-30% of epoxy resin or polyester resin.

2. The manufacturing method according to claim 1, **characterized in that**, in the step (4), the temperature for curing and roasting is 120-160 degrees centigrade.

3. The manufacturing method according to claim 2, **characterized in that**, in the step (4), the during time for curing and roasting is 20 -30 min.

4. The manufacturing method according to claim 3, **characterized in that** the temperature for curing and roasting is 130 degrees centigrade and the during time for curing and roasting is 25 min.

5. The manufacturing method according to claim 1, **characterized in that** the step (5) further comprises a step (53) following the step (52): spraying fluorocarbon varnish to form a fluorocarbon varnish coating.

6. The manufacturing method according to claim 5, **characterized in that** the step (5) further comprises a step (511) between the step (51) and the step (52): spraying fluorocarbon primer surfacer to form a fluorocarbon primer surfacer coating.

7. The manufacturing method according to claim 6, **characterized in that**, in the step (51), the thickness of the formed fluorocarbon primer coating is 5-10 um;
in the step (52), the thickness of the formed fluorocarbon finish coating is 25-30 um;
in the step (53), the thickness of the formed fluorocarbon varnish coating is 10-20 um; and
in the step (511), the thickness of the formed fluorocarbon primer surfacer coating is 20-25 um.

8. The manufacturing method according to claim 1, **characterized in that** the step (1) comprises the following steps of:
(11) soaking the aluminum alloy section base material in a degreasing solution for degreasing;
(12) washing the aluminum alloy section with water;
(13) soaking the aluminum alloy section in a sodium hydroxide solution for alkaline etching;
(14) washing the aluminum alloy section with water;
(15) soaking the aluminum alloy section in a sulfuric acid solution for neutralizing; and
(16) washing the aluminum alloy section with water;
the step (2) comprises of: putting the aluminum alloy section into the sulfuric acid solution, supplying DC power by using the aluminum alloy section as an anode and a pure aluminum plate as a cathode to generate the oxide film on the surface of the aluminum alloy section, wherein the thickness of the oxide film is 5-15 um;
the step (3) comprises: putting the aluminum alloy section into the electrophoresis paint solution, supplying DC power by using the aluminum alloy section as an anode and a stainless steel plate as a cathode to form the electrophoresis paint film on the surface of the aluminum alloy section by electrolytic deposition;
a step between the step (2) and the step (3) comprises: washing the aluminum alloy section with water and hot water;
a step between the step (3) and the step (4) comprises: washing the aluminum alloy section with water; and
a step following the step (5) comprises: curing and roasting the aluminum alloy section.

9. An aluminum alloy section, **characterized in that** the aluminum alloy section is manufactured by the manufacturing method according to any one of claims 1 to 8.

## Patentansprüche

1. Verfahren zur Herstellung eines Aluminiumlegierungsprofils, umfassend die folgenden Schritte:
(1) Vorbehandeln eines Aluminiumlegierungsprofil-Basismaterials;
(2) Anodisieren des vorbehandelten Aluminiumlegierungsprofil-Basismaterials unter Bildung einer Oxidationsschicht auf der Oberfläche des Aluminiumlegierungsprofils;
(3) Durchführen einer anodischen Elektrophoresebehandlung mit dem Aluminiumlegierungsprofil-Basismaterial unter Bildung einer Elektrophoreselackschicht auf der Oberfläche des Aluminiumlegierungsprofils;
(4) Härten und Rösten des Aluminiumlegierungsprofils; und
(5) Sprühen von Fluorkohlenstofflack auf die Oberfläche des Aluminiumlegierungsprofils unter Bildung einer Fluorkohlenstoffbeschichtung;
**dadurch gekennzeichnet, dass** Schritt (5) die folgenden Schritte umfasst:
(51) Aufsprühen von Fluorkohlenstoffgrundierung unter Bildung einer Fluorkohlenstoffgrundierungsbeschichtung; und
(52) Aufsprühen von Fluorkohlenstoffdecklack unter Bildung einer Fluorkohlenstoffdeckbeschichtung;
wobei die Fluorkohlenstoffgrundierungsbeschichtung Acrylharz, Fluorkohlenstoffharz und Epoxidharz/Polyesterharz in Gewichtsprozentanteilen von 10-20% Acrylharz, 35-50% Fluorkohlenstoffharz und 16-30% Epoxidharz oder Polyesterharz enthält.

2. Herstellungsverfahren gemäß Anspruch 1, **dadurch gekennzeichnet, dass** in Schritt (4) die Temperatur zum Härten und Rösten 120-160 °C beträgt.

3. Herstellungsverfahren gemäß Anspruch 2, **dadurch gekennzeichnet, dass** in Schritt (4) die Zeitdauer des Härtens und Röstens 20-30 min beträgt.

4. Herstellungsverfahren gemäß Anspruch 3, **dadurch gekennzeichnet, dass** die Temperatur des Härtens und Röstens 130 °C beträgt und die Zeitdauer des Härtens und Röstens 25 min beträgt.

5. Herstellungsverfahren gemäß Anspruch 1, **dadurch gekennzeichnet, dass** Schritt (5) nach Schritt (52) weiterhin einen Schritt (53) umfasst: Aufsprühen von Fluorkohlenstofffirnis unter Bildung einer Fluorkohlenstofffirnisbeschichtung.

6. Herstellungsverfahren gemäß Anspruch 5, **dadurch gekennzeichnet, dass** Schritt (5) zwischen Schritt (51) und Schritt (52) weiterhin einen Schritt (511) umfasst: Aufsprühen von Fluorkohlenstoffgrundierungsspachtelmasse unter Bildung einer Fluorkohlenstoffgrundierungsspachtelbeschichtung.

7. Herstellungsverfahren gemäß Anspruch 6, **dadurch gekennzeichnet, dass** in Schritt (51) die Dicke der gebildeten Fluorkohlenstoffgrundierungsbeschichtung 5-10 µm beträgt;
in Schritt (52) die Dicke der gebildeten Fluorkohlenstoffdeckbeschichtung 25-30 µm beträgt;
in Schritt (53) die Dicke der gebildeten Fluorkohlenstofffirnisbeschichtung 10-20 µm beträgt; und
in Schritt (511) die Dicke der gebildeten Fluorkohlenstoffgrundierungsspachtelbeschichtung 20-25 µm beträgt.

8. Herstellungsverfahren gemäß Anspruch 1, **dadurch gekennzeichnet, dass** Schritt (1) die folgenden Schritte umfasst:
(11) Tränken des Aluminiumlegierungsprofil-Basismaterials in einer Entfettungslösung zur Entfettung;
(12) Waschen des Aluminiumlegierungsprofils mit Wasser;
(13) Tränken des Aluminiumlegierungsprofils in einer Natriumhydroxidlösung zum alkalischen Ätzen;
(14) Waschen des Aluminiumlegierungsprofils mit Wasser;
(15) Tränken des Aluminiumlegierungsprofils in einer Schwefelsäurelösung zum Neutralisieren; und
(16) Waschen des Aluminiumlegierungsprofils mit Wasser;
Schritt (2) das Eintauchen des Aluminiumlegierungsprofils in die Schwefelsäurelösung, das Durchleiten von Gleichstrom unter Verwendung des Aluminiumlegierungsprofils als Anode und eines reinen Aluminiumblechs als Kathode umfasst, wobei die Oxidschicht auf der Oberfläche des Aluminiumlegierungsprofils entsteht, wobei die Dicke der Oxidschicht 5-15 µm beträgt;
Schritt (3) das Eintauchen des Aluminiumlegierungsprofils in die Elektrophoreselacklösung, das Durchleiten von Gleichstrom unter Verwendung des Aluminiumlegierungsprofils als Anode und eines Edelstahlblechs als Kathode umfasst, wobei durch elektrolytische Abscheidung die Elektrophoreselackschicht auf der Oberfläche des Aluminiumlegierungsprofils entsteht;
ein Schritt zwischen Schritt (2) und Schritt (3) das Waschen des Aluminiumlegierungsprofils mit Wasser und heißem Wasser umfasst;
ein Schritt zwischen Schritt (3) und Schritt (4) das Waschen des Aluminiumlegierungsprofils mit Wasser umfasst; und
ein Schritt nach Schritt (5) das Härten und Rösten des Aluminiumlegierungsprofils umfasst.

9. Aluminiumlegierungsprofil, **dadurch gekennzeichnet, dass** das Aluminiumlegierungsprofil nach dem Herstellungsverfahren gemäß einem der Ansprüche 1 bis 8 hergestellt ist.

## Revendications

1. Procédé pour fabriquer un profilé en alliage d'aluminium, comprenant les étapes suivantes consistant à :
(1) prétraiter un matériau de base d'un profilé en alliage d'aluminium,
(2) anodiser ledit matériau de base d'un profilé en alliage d'aluminium pour former une couche d'oxydation sur la surface d'un profilé en alliage d'aluminium,
(3) effectuer un traitement d'électrodéposition anodique avec le matériau de base d'un profilé en alliage d'aluminium pour former une couche d'agent de revêtement par électrodéposition sur la surface du profilé en alliage d'aluminium,
(4) durcir et rôtir le profilé en alliage d'aluminium, et
(5) pulvériser un agent de revêtement fluorocarboné sur la surface du profilé en alliage d'aluminium pour former un revêtement de fluorocarbone,
**caractérisé en ce que** ladite étape (5) comprend les étapes suivantes consistant à :
(51) pulvériser un apprêt fluorocarboné pour former un revêtement d'apprêt fluorocarboné, et
(52) pulvériser un apprêt fluorocarboné pour former un revêtement de finition fluorocarboné,
dans lequel le revêtement d'apprêt fluorocarboné contient une résine acrylique, une résine fluorocarbonée et une résine époxy/résine polyester en pourcentage en poids 10-20 % de résine acrylique, 35-50 % de résine fluorocarbonée, et 16-30 % de résine époxy ou résine polyester.

2. Procédé de fabrication selon la revendication 1, **caractérisé en ce que**, dans l'étape (4), la température pour durcir et rôtir est 120-160 °C.

3. Procédé de fabrication selon la revendication 2, **caractérisé en ce que**, dans l'étape (4), la durée pour durcir et rôtir est 20-30 min.

4. Procédé de fabrication selon la revendication 3, **caractérisé en ce que** la température pour durcir et rôtir est 130 °C, et la durée pour durcir et rôtir est 25 min.

5. Procédé de fabrication selon la revendication 1, **caractérisé en ce que** l'étape (5) comprend en outre une étape (53) après l'étape (52) : pulvériser un vernis de fluorocarbone pour former un revêtement de vernis de fluorocarbone.

6. Procédé de fabrication selon la revendication 5, **caractérisé en ce que** l'étape (5) comprend en outre une étape (511) entre l'étape (51) et l'étape (52) : pulvériser un apprêt surfaçant de fluorocarbone pour former un revêtement d'apprêt surfaçant de fluorocarbone.

7. Procédé de fabrication selon la revendication 6, **caractérisé en ce que**, dans l'étape (51), l'épaisseur du revêtement d'apprêt de fluorocarbone formé est 5-10 µm,
dans l'étape (52), l'épaisseur du revêtement de finition fluorocarboné formé est 25-30 µm,
dans l'étape (53), l'épaisseur du revêtement de vernis de fluorocarbone formé est 10-20 µm, et
dans l'étape (511), l'épaisseur du revêtement d'apprêt surfaçant de fluorocarbone formé est 20-25 µm.

8. Procédé de fabrication selon la revendication 1, **caractérisé en ce que** l'étape (1) comprend les étapes suivantes consistant à :
(11) tremper le matériau de base d'un profilé en alliage d'aluminium dans une solution de dégraissage pour dégraisser,
(12) laver le profilé en alliage d'aluminium avec de l'eau,
(13) tremper le profilé en alliage d'aluminium dans une solution d'hydroxyde de sodium pour une gravure alcaline,
(14) laver le profilé en alliage d'aluminium avec de l'eau,
(15) tremper le profilé en alliage d'aluminium dans une solution d'acide sulfurique pour neutraliser, et
(16) laver le profilé en alliage d'aluminium avec de l'eau,
l'étape (2) consiste à placer le profilé en alliage d'aluminium dans la solution d'acide sulfurique, alimenter un courant continu en utilisant le profilé en alliage d'aluminium comme anode et une plaque en aluminium pur comme cathode pour générer la couche d'oxyde sur la surface du profilé en alliage d'aluminium, dans lequel l'épaisseur de la couche d'oxyde est 5-15 µm,
l'étape (3) consiste à placer le profilé en alliage d'aluminium dans la solution de l'agent de revêtement par électrodéposition, alimenter un courant continu en utilisant le profilé en alliage d'aluminium comme anode et une plaque en acier inoxydable comme cathode pour former la couche d'agent de revêtement par électrodéposition sur la surface du profilé en alliage d'aluminium par dépôt électrolytique,
une étape entre l'étape (2) et l'étape (3) consiste à laver le profilé en alliage d'aluminium avec de l'eau et avec de l'eau chaude,
une étape entre l'étape (3) et l'étape (4) consiste à laver le profilé en alliage d'aluminium avec de l'eau, et
une étape après l'étape (5) consiste à durcir et rôtir le profilé en alliage d'aluminium.

9. Profilé en alliage d'aluminium, **caractérisé en ce que** ledit profilé en alliage d'aluminium a été fabriqué par le procédé de fabrication selon l'une quelconque des revendications 1 à 8.
